# EUROPEAN PATENT APPLICATION

(11) **EP 4 286 119 A1**
(43) Date of publication of application: **06.12.2023**
(21) Application number: 22882414.0
(22) Date of filing: 15.08.2022
(51) Int. Cl.: B26D 1/08, B23Q 7/00

(54) **FOLLOW-UP RECEIVING MODULE, ELECTRODE PLATE CUTTING APPARATUS, AND DISCHARGING METHOD**

(30) Priority: 20.10.2021 CN 202111222894
(71) Applicant: Guangdong Lyric Robot Automation Co., Ltd., Huicheng District Huizhou Guangdong 516000 (CN)
(72) Inventor: YAN, Fengwei, Huizhou, Guangdong 516000 (CN); YANG, Donghua, Huizhou, Guangdong 516000 (CN); LIANG, Hengjian, Huizhou, Guangdong 516000 (CN); YANG, Jiahuan, Huizhou, Guangdong 516000 (CN); LIU, Tangpu, Huizhou, Guangdong 516000 (CN)
(74) Representative: Purdylucey Intellectual Property
(86) International application number: PCT/CN2022/112573
(87) International publication number: WO 2023/065794

(57) **Abstract**

A follow-up receiving module, comprising a rack, a receiving unit and a driving unit, wherein the receiving unit is used for receiving a material from the upstream; the receiving unit comprises a sliding table (110), the sliding table (110) being mounted on the rack, and the sliding table(110) being located at one end of the rack close to the upstream; and the driving unit comprises a first driver (230) and a transmission mechanism, the first driver (230) being mounted on the rack, the first driver (230) being in transmission connection with the sliding table (110) by means of the transmission mechanism, and the first driver (230) being capable of driving the sliding table (110) to move in a reciprocating manner in the direction in which the material is conveyed. By means of the provision of the sliding table that is capable of moving in a reciprocating manner in the follow-up receiving module, the sliding table follows the upstream material to move, such that the sliding table can avoid a moving follow-up cutting module; in addition, the follow-up receiving module can receive a material in a cutting process. Further provided are an electrode plate cutting apparatus and a discharging method.

## Description

### TECHNICAL FIELD

The present invention relates to the field of electrode plate cutting, in particular to a follow-up receiving module, an electrode plate cutting apparatus and a discharging method.

### BACKGROUND

Electrode plate cutting is required for a battery cell stacking process. In a traditional electrode plate cutting process, an electrode plate is conveyed by a conveying module from the upstream to a set cutting position, a cutter cuts the electrode plate, and the cut electrode plate is then conveyed to the downstream after the cutting. The conveying module needs to be paused and resumed repeatedly in this process, so that the electrode plate cannot be conveyed continuously, resulting in low conveying efficiency of the electrode plate.

Currently, a follow-up cutting method has been used in a battery cell winding process, which enables the conveying module to continuously conveys the electrode plate to a downstream winding needle module, allows a cutter of a follow-up cutting module to move synchronously with the electrode plate, and makes the follow-up cutting module cut the electrode plate at a tail end of the conveying module. Since the conveying module achieves continuous conveying, the follow-up cutting method can improve the conveying efficiency of the electrode plate. Due to a reciprocating movement of the follow-up cutting module during the cutting, it is necessary to reserve a corresponding clearance between the conveying module and the winding needle module. The electrode plate cut off in a winding process has a larger length, and therefore the front end of the electrode plate is fixed on the winding needle module during the cutting, enabling the winding needle module to receive the electrode plate.

However, with regard to the battery cell stacking process, the electrode plate cut off has a smaller size and is smaller than the reserved clearance, such that the downstream module can receive the material only after the follow-up cutting module completes cutting. No component receives the front end of the electrode plate in a cutting process, which can lead to a decrease in cutting quality, and can also cause deformation of the electrode plate under the influence of gravity during the cutting, affecting subsequent receiving and the like, and thus adversely affecting the stacking process.

### SUMMARY

The present invention aims to solve at least one of the technical problems existing in the existing technology. In view of this, the present invention provides a follow-up receiving module, an electrode plate cutting apparatus and a discharging method. The follow-up receiving module can receive a material in a cutting process.

The follow-up receiving module according to the present invention, including a rack, a receiving unit and a driving unit, where the receiving unit is used for receiving a material from the upstream; the receiving unit includes a sliding table, the sliding table being mounted on the rack, and the sliding table being located at an end of the rack close to the upstream; and the driving unit includes a first driver and a transmission mechanism, the first driver being mounted on the rack, the first driver being in transmission connection with the sliding table by means of the transmission mechanism, and the first driver being capable of driving the sliding table to move in a reciprocating manner in the direction in which the material is conveyed.

The follow-up receiving module according to the present invention has at least the following technical benefits: by means of the provision of the sliding table that is capable of moving in a reciprocating manner, the sliding table follows the upstream material to move, such that the sliding table can avoid a moving follow-up cutting module and can also retain the received material, and the follow-up receiving module can receive the material in the cutting process.

According to some embodiments of the present invention, the transmission mechanism includes a cam and a connecting assembly, the cam is mounted on the first driver, the connecting assembly connects the cam and the sliding table, and the connecting assembly is used for driving the sliding table to move along a preset route.

According to some embodiments of the present invention, the connecting assembly includes a swing arm articulated on the rack, and the swing arm includes a first connecting portion and a second connecting portion; the cam includes a cam groove, and the first connecting portion is connected to the cam groove; the sliding table includes a connecting groove, the second connecting portion is connected to the connecting groove, and a distance between the first connecting portion and an articulating point of the swing arm is adjustable and/or a distance between the second connecting portion and an articulating point of the swing arm is adjustable.

According to some embodiments of the present invention, the receiving unit includes a conveyor belt and a roller assembly; the conveyor belt is mounted on the roller assembly, and the roller assembly includes a first main roller, a second main roller and temporary storage rollers; the first main roller is mounted on the sliding table, the second main roller is mounted on the rack, the first main roller is located at the end of the sliding table close to the upstream, the second main roller is located at the downstream of the first main roller, and the temporary storage rollers are used for temporarily storing an excessive portion of the conveyor belt.

According to some embodiments of the present invention, the roller assembly includes two temporary storage rollers; one of the temporary storage rollers is mounted on the sliding table, the other of the temporary storage rollers is mounted on the rack, and the two temporary storage rollers are respectively in contact with different sides of the conveyor belt, such that the two temporary storage rollers can move close to or away from each other in response to the first main roller and the second main roller being away from or close to each other; the roller assembly includes a tensioning roller that is used for tensioning the conveyor belt and is movably mounted on the rack, and an elastic tensioning member is provided between the rack and the tensioning roller.

According to some embodiments of the present invention, the conveyor belt is provided with suction holes, the sliding table includes a suction plate, a vacuum cavity is formed in the suction plate and is used for communicating with a negative pressure suction device, and an opening of the vacuum cavity matches the suction hole to allow the suction hole to suck the material.

According to some embodiments of the present invention, the sliding table includes a pressing member; the pressing member is located on the side of the conveyor belt away from the suction plate, such that the pressing member can get close to the conveyor belt so as to press the material on the conveyor belt; the pressing member includes a pressing roller, and the pressing roller is adapted to the first main roller.

According to some embodiments of the present invention, the follow-up receiving module includes a waste material collecting unit, the waste material collecting unit includes a waste material box and a collecting pipe, the collecting pipe communicates with the waste material box, the collecting pipe includes a collecting port, and the collecting port is located at the downstream of the receiving unit.

According to some embodiments of the present invention, the collecting pipe is movably mounted on the rack, the driving unit includes a second driver, the second driver is connected to the collecting pipe, and the second driver is capable of driving the collecting pipe to move, allowing the collecting port to receive or avoid the material.

An electrode plate cutting apparatus according to the present invention includes a material conveying line, a follow-up cutting module and the follow-up receiving module provided by the present invention. The follow-up cutting module is located at the downstream of the material conveying line, and the follow-up receiving module is located at the downstream of the follow-up cutting module, such that the material conveying line can receive and convey an electrode plate from the upstream, the follow-up cutting module can move in the reciprocating manner to cut the electrode plate in a follow-up manner, and the sliding table can follow the follow-up cutting module to move so as to receive the electrode plate.

The electrode plate cutting apparatus according to the present invention can achieve follow-up receiving during follow-up cutting of the electrode plate, thereby improving the receiving effect of the electrode plate.

A discharging method according to the present invention uses the electrode plate cutting apparatus provided by the present invention, and the discharging method includes the following steps:
receiving an electrode plate from the upstream by the material conveying line, and conveying the electrode plate toward the downstream by the material conveying line;
moving the follow-up cutting module following the electrode plate from an initial position of follow-up cutting, moving the sliding table following the electrode plate from the initial position of follow-up cutting, and receiving the electrode plate by the sliding table;
cutting off the electrode plate by the follow-up cutting module in response to the speed of the follow-up cutting module in a conveying direction of the electrode plate being consistent with the conveying speed of the electrode plate; and
moving the follow-up cutting module and the sliding table in a direction opposite to the conveying direction of the electrode plate, so as to return to their respective initial position.

The discharging method according to the present invention has at least the following technical effects: the follow-up cutting module can increase the discharging speed of the electrode plate by performing follow-up cutting, and the follow-up receiving module can receive electrode plate by performing follow-up receiving in the cutting process, thereby improving the receiving effect of the electrode plate.

According to some embodiments of the present invention, the receiving unit includes a conveyor belt and a roller assembly, the conveyor belt is mounted on the roller assembly, and the roller assembly includes a first main roller and a second main roller; the first main roller is mounted on the sliding table, the second main roller is mounted on the rack, the first main roller is located at the end of the sliding table close to the upstream, and the second main roller is located at the downstream of the first main roller; the conveyor belt is provided with suction holes, the sliding table includes a suction plate, a vacuum cavity is formed in the suction plate and is used for communicating with a negative pressure suction device, and an opening matches the suction hole to allow the suction hole to suck the material; the sliding table includes a pressing member, and the pressing member is located on the side of the conveyor belt away from the suction plate, such that the pressing member can move close to the conveyor belt so as to press the material on the conveyor belt; the pressing member includes a pressing roller, and the pressing roller is adapted to the first main roller;
where cutting off the electrode plate by the follow-up cutting module in response to the speed of the follow-up cutting module in a conveying direction of the electrode plate being consistent with the conveying speed of the electrode plate, includes:
pressing, by the pressing member, the electrode plate on the conveyor belt;
starting the negative pressure suction device to enable the conveyor belt to suck the electrode plate;
cutting off the electrode plate by the follow-up cutting module; and
conveying, by the conveyor belt, a cut portion of the electrode plate toward the downstream.

### BRIEF DESCRIPTION OF DRAWINGS

The foregoing and/or additional aspects and advantages of the present invention will be apparent and readily understood from the description of embodiments in conjunction with the following accompanying drawings, in which:
FIG. 1 is an axonometric schematic diagram of an embodiment of a follow-up receiving module according to the present invention;
FIG. 2 is an axonometric schematic diagram of the embodiment of a follow-up receiving module according to the present invention at another viewing angle;
FIG. 3 is a schematic transmission diagram of an embodiment of a driving unit according to the present invention;
FIG. 4 is a schematic cross-sectional view of the embodiment of the follow-up receiving module according to the present invention;
FIG. 5 is an axonometric schematic diagram of a pressing member region of the embodiment of the follow-up receiving module according to the present invention;
FIG. 6 is a schematic diagram showing a follow-up receiving process according to the present invention;
FIG. 7 is a schematic diagram showing the follow-up receiving process according to the present invention;
FIG. 8 is a schematic diagram showing the follow-up receiving process according to the present invention;
FIG. 9 is a schematic diagram showing the follow-up receiving process according to the present invention.

List of reference numerals:
110: Sliding table; 111: Suction plate; 112: Pressing roller; 113: Pressing roller mounting seat; 114: Temporary storage roller mounting seat; 115: Cam connecting seat; 120: Conveyor belt; 131: First main roller; 132: Second main roller; 133: Temporary storage roller; 134: Tensioning roller; 210: Cam; 211: Cam groove; 220: Swing arm; 221: Main arm; 222: Extension arm; 230: First driver; 240: Second driver; 250: Limiting plate; 310: Waste material box; 320: Collecting pipe; 400: Material conveying line; 500: Follow-up cutting module; 600: Electrode plate.

### DETAILED DESCRIPTION

The embodiments of the present invention will be described below in detail, examples of which are illustrated in the accompanying drawings, wherein like or similar reference numerals refer to the same or similar elements or elements having the same or similar functions throughout. The embodiments described below with reference to accompanying drawings are exemplary and are intended to be illustrative of the present invention, and will not be interpreted as limiting the present invention.

In the description of the present invention, it should be understood that the orientations or the position relationships indicated by the terms such as "upper", "lower", "front", "rear", "left" and "right" are based on the orientations or the position relationships shown in the accompanying drawings, which are only for ease of description of the present invention and for simplifying the description, rather than indicating or implying that the devices or elements referred to necessarily have a specific orientation, a specific orientation structure and operation, and therefore cannot be construed as limiting the present invention.

In the description of the present invention, the term "a plurality of' means one or more, the term "multiple" means two or more, the expressions such as "greater than", "less than" or "exceeding a certain value" can be construed as not including the value, and the expressions such as above, below or within a certain value can be construed as including the value. The terms "first" and "second" described are intended to distinguish the technical features only and should not be construed as indicating or implying relative importance or implicitly indicating the number of technical features indicated.

In the description of the present invention, unless otherwise clearly defined, words such as provision, mounting, and connection should be construed in a broad sense, and those skilled in the art wound have been able to reasonably determine the specific meanings of the above words in the description of the present invention in combination with the specific content of the technical solution.

A follow-up receiving module according to the present invention includes a rack, a receiving unit and a driving unit; the receiving unit is used for receiving a material from the upstream; the receiving unit includes a sliding table 110, the sliding table 110 is mounted on the rack, and the sliding table 110 is located at the end of the rack close to the upstream; the driving unit includes a first driver 230 and a transmission mechanism, the first driver 230 is mounted on the rack, the first driver 230 is in transmission connection with the sliding table 110 by means of the transmission mechanism, and the first driver 230 is capable of driving the sliding table 110 to move in a reciprocating manner in the direction in which the material is conveyed.

In the follow-up receiving module according to the present invention, by means of the provision of the sliding table 110 that is capable of moving in the reciprocating manner, the sliding table 110 follows the upstream material to move, such that the sliding table can avoid a moving follow-up cutting module 500 and can also retain the received material, and a follow-up receiving module can receive the material in the cutting process.

It can be understood that in addition to a function of material receiving during follow-up cutting, the follow-up receiving module can also be used for receiving a material in other scenarios that need avoidance. The material can be an electrode plate 600 that needs to be cut in a stacking process, or can be other materials.

The driving unit can drive the sliding table 110 in different manners.

According to some embodiments of the present invention, the transmission mechanism includes a cam 210 that is mounted on the first driver 230. The reciprocating movement of the sliding table 110 includes a receiving stage in the same direction as a conveying direction of the material and a reset stage opposite to the conveying direction of the material. By designing a specific trajectory for the cam, the movements of the sliding table 110 at different stages can meet the design requirements, such that the speed of the sliding table 110 in a specific period of time at the receiving stage is synchronized with the conveying speed of the material. In addition, different movement characteristics of the sliding table 110 can be obtained by replacing different cams 210 to meet the needs in different receiving scenarios. By using the cam 210 for transmission, the requirement for high-speed reciprocating movement of the sliding table 110 can also be met, which is conductive to improving the receiving efficiency of the follow-up module.

Of course, the driving unit can also drive the sliding table 110 by means of a linear motor, a crank and rocker mechanism, a crank and slider mechanisms, etc.

In some embodiments, the transmission mechanism includes a connecting assembly that connects the cam 210 and the sliding table 110, and the connecting assembly is used for driving the sliding table 110 to move along a preset route. The connecting assembly can adjust a proportional relationship between a trajectory change of the cam and a stroke of the sliding table 110, thereby prolonging or shortening the stroke of the sliding table 110, and facilitating the design of the cam 210. For example, the trajectory of the cam 210 can be amplified by using the connecting assembly, so that the sliding table 110 can be driven, by using a smaller cam 210, to perform wide-range reciprocating movement.

In some embodiments, the connecting assembly includes a swing arm 220, the swing arm 220 is articulated on the rack, and the swing arm 220 includes a first connecting portion and a second connecting portion; the cam 210 includes a cam groove 211, the first connecting portion is connected to the cam groove 211, the sliding table 110 includes a connecting groove, and the second connecting portion is connected to the connecting groove. The swing arm 220 scales the stroke of the sliding table 110 on the basis of the principle of leverage.

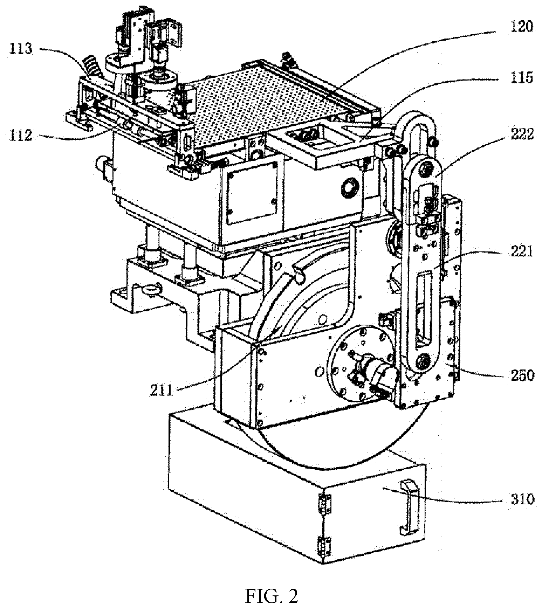

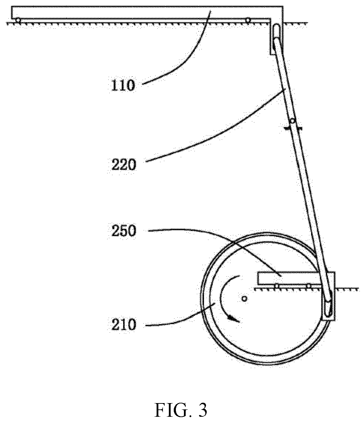

The swing arm 220 can use different specific implementations, for example, as shown in FIGS. 2 and 3, the swing arm 220 is in the shape of a straight rod, one end of the swing arm 220 is connected to the connecting groove, and the other end of the swing arm 220 is connected to the cam groove 211, and an articulating point between the swing arm 220 and the rack is located between the two ends of the swing arm 220.

Certainly, the swing arm 220 can also in other shapes, and the first connecting portion and the second connecting portion can also be located at other positions of the swing arm 220. For example, the articulating point of the swing arm 220 can be designed at an end of the swing arm 220 rather than being designed between the first connecting portion and the second connecting portion.

In some embodiments, a distance between the first connecting portion and the articulating point of the swing arm 220 is adjustable and/or a distance between the second connecting portion and the articulating point of the swing arm 220 is adjustable. The distance between the first connecting portion and the articulating point of the swing arm 220 refers to a first arm length, and the distance between the second connecting portion and the articulating point of the swing arm 220 refers to a second arm length. By adjusting the first arm length and/or the second arm length, the proportional relationship between the trajectory change of the cam 210 and the movement speed of the sliding table 110 can be adjusted, widening an application range of the cam 210. For example, as shown in FIG. 2, the second arm length is adjustable. Specifically, the swing arm 220 includes a main arm 221 and an extension arm 222. The first connecting portion and the articulating point of the swing arm 220 are located on the main arm 221, the second connecting portion is located on the extension arm 222, and the extension arm 222 is movably mounted on the main arm 221; an adjustment screw is mounted on the extension arm 222 and is pressed on the main arm 221, and by adjusting a screwing-in depth of the adjustment screw, a mounting position of the extension arm 222 can be changed, thereby achieving the adjustment of the proportional relationship.

It can be understood that the manner of adjusting the first arm length and the second arm length is not limited to the use of the adjustment screw. For example, the swing arm 220 can be designed as a telescopic structure, and for another example, multiple mounting points for mounting the extension arm 222 can be designed on the main arm 221, such that the mounting position and the like of the extension arm 222 can be adjusted by selecting different mounting points.

According to some embodiments of the present invention, the receiving unit includes a conveyor belt 120 and a roller assembly, the conveyor belt 120 is mounted on the roller assembly, and the roller assembly includes a first main roller 131 and a second main roller 132; the first main roller 131 is mounted on the sliding table 110, the second main roller 132 is mounted on the rack, the first main roller 131 is located at the end of the sliding table 110 close to the upstream, and the second main roller 132 is located at the downstream of the first main roller 131. The cut material can be conveyed toward the downstream by means of the conveyor belt 120, avoiding an interference for subsequent cutting.

In some embodiments, the roller assembly includes a temporary storage roller 133 for temporarily storing an excessive portion of the conveyor belt 120. It can be understood that, with the movement of the sliding table 110, the total length of the required conveyor belt 120 also change, and the temporary storage roller 133 can temporarily store the current excessive portion of the conveyor belt 120 and release said portion when needed, ensuring normal operation of the conveyor belt 120.

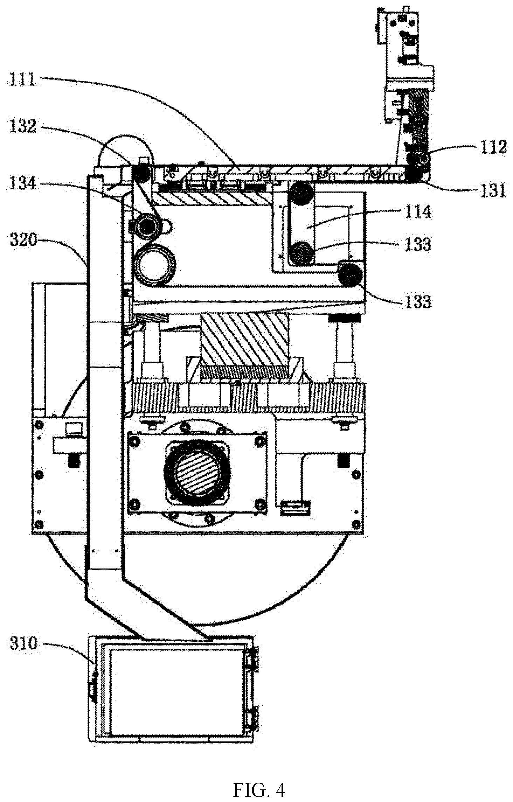

In some embodiments, the roller assembly includes two temporary storage rollers 133, where one temporary storage roller 133 is mounted on the sliding table 110, the other temporary storage roller 133 is mounted on the rack, and the two temporary storage rollers 133 are respectively in contact with different sides of the conveyor belt 120, such that the two temporary storage rollers 133 can move close to or away from each other in response to the first main roller 131 and the second main roller 132 being away from or close to each other. The change in a distance between the two temporary storage rollers 133 causes the length of the conveyor belt 120 between the two temporary storage rollers 133 to change, thereby achieving temporary storage. For example, as shown in FIG. 4, in response to the first main roller 131 and the second main roller 132 moving close to each other, the length of the conveyor belt 120 between the first main roller 131 and the second main roller 132 decreases, and in this case, the two temporary storage rollers 133 get away from each other, thereby temporarily storing the excessive conveyor belt 120 between the first main roller 131 and the second main roller 132; in response to the first main roller 131 and the second main roller 132 moving away from each other, the two temporary storage rollers 133 get close to each other, thereby releasing the temporarily stored conveyor belt 120.

Since a mutual movement between the two temporary storage rollers 133 is achieved by the movement of the sliding table 110, there is no need to design an additional driving structure for the temporary storage rollers 133, which is beneficial to simplifying the design of the follow-up receiving module; moreover, because the temporary storage rollers 133 performs temporary storage on the basis of the distance change, the temporary storage rollers 133 without using elastic members such as springs, can avoid the wear or elasticity reduction due to repeated deformation of the elastic members, so that the stability of the temporary storage rollers 133 is improved, the service life thereof is prolonged, and the temporary storage rollers are suitable for high-frequency follow-up receiving.

It can be understood that the temporary storage rollers 133 can also perform the temporary storage in other manners, such as designing a rotatable temporary storage table, such that the two temporary storage rollers 133 are oppositely mounted at two ends of the temporary storage table, and the two temporary storage rollers 133 are in contact with the different sides of the conveyor belt 120 respectively. When the temporary storage table rotates, the temporary storage rollers 133 cause the conveyor belt 120 to bend so as to achieve temporary storage, and a corner of the temporary storage table enables the amount of temporary storage to be controlled well. The rotation of the temporary storage table can be driven by a rotating motor or a torsion spring.

In some embodiments, the roller assembly includes a tensioning roller 134, the tensioning roller 134 is used for tensioning the conveyor belt 120, the tensioning roller 134 is movably mounted on the rack, and an elastic tensioning member is provided between the rack and the tensioning roller 134. The tensioning roller 134 is capable of tensioning the conveyor belt 120, ensuring the normal operation of the conveyor belt 120.

According to some embodiments of the present invention, the conveyor belt 120 is provided with suction holes, the sliding table 110 includes a suction plate 111, a vacuum cavity is formed in the suction plate 111 and is used for communicating with a negative pressure suction device, and an opening of the vacuum cavity matches the suction hole to allow the suction hole to suck a material. A suction force of the suction holes enables the conveyor belt 120 to position the material stably, avoiding a movement of the material during the conveying and the cutting, and the suction force of the suction holes can also force the cut material to be separated from the follow-up cutting module 500 at the upstream of the follow-up receiving module.

In some embodiments, the sliding table 110 includes a pressing member that is located on the side of the conveyor belt 120 away from the suction plate 111, and the pressing member is capable of moving close to the conveyor belt 120 to press the material on the conveyor belt 120. The pressing member can improve a contact effect between the material and the conveyor belt 120, thereby improving the suction effect of the suction holes on the material. In some embodiments, the pressing member includes a pressing roller 112 that is adapted to the first main roller 131. The pressing roller 112 is rotatable, thereby reducing an interference for material conveying.

According to some embodiments of the present invention, the follow-up receiving module includes a waste material collecting unit, the waste material collecting unit includes a waste material box 310 and a collecting pipe 320, the collecting pipe 320 communicates with the waste material box 310, and the collecting pipe 320 includes a collecting port that is located at the downstream of the receiving unit. The waste material collecting unit can collect an unqualified electrode plate 600, and by means of the provision of the waste material collecting unit, the follow-up receiving module can have richer functions and higher integration degree.

In some embodiments, the collecting pipe 320 is movably mounted on the rack, the driving unit includes a second driver 240, the second driver 240 is connected to the collecting pipe 320, and the second driver 240 is capable of driving the collecting pipe 320 to move, allowing the collecting port to receive or avoid the material. The collecting pipe 320 can be movable or swingable. For example, as shown in FIG. 4, the second driver 240 can drive the collecting pipe 320 to move up and down, such that the collecting port is aligned to the conveyor belt 120 or lower than the conveyor belt 120. When the collecting port is lower than the conveyor belt 120, the electrode plate 600 can smoothly pass over the waste material collecting unit to be conveyed toward the downstream, and in response to the collecting port being aligned to the conveyor belt 120, the electrode plate 600 enters the collecting port and falls into the waste material box 310.

An electrode plate cutting apparatus according to the present invention includes a material conveying line 400, a follow-up cutting module 500 and the follow-up receiving module provided by the present invention. The follow-up cutting module 500 is located at the downstream of the material conveying line 400, the follow-up receiving module is located at the downstream of the follow-up cutting module 500, the material conveying line 400 is capable of receiving and conveying the electrode plate 600 from the upstream, the follow-up cutting module 500 is capable of moving in a reciprocating manner to cut the electrode plate 600 in a follow-up manner, and the sliding table 110 is capable of following the follow-up cutting module 500 to move, thereby receiving the electrode plate 600.

The electrode plate cutting apparatus according to the present invention can achieve follow-up receiving during follow-up cutting of the electrode plate 600, thereby improving the receiving effect of the electrode plate 600.

A discharging method according to the present invention uses the electrode plate cutting apparatus provided by the present invention, and the discharging method includes the following steps:
receiving the electrode plate 600 from the upstream by the material conveying line 400, and conveying the electrode plate 600 toward the downstream by the material conveying line 400;
moving the follow-up cutting module 500 following the electrode plate 600 from an initial position of follow-up cutting, moving the sliding table 110 following the electrode plate 600 from the initial position of follow-up cutting, and receiving the electrode plate 600 by the sliding table 110;
cutting off the electrode plate 600 by the follow-up cutting module 500 in response to the speed of the follow-up cutting module 500 in the conveying direction of the electrode plate 600 being consistent with the conveying speed of the electrode plate 600; and
moving the follow-up cutting module 500 and the sliding table 110 in a direction opposite to the conveying direction of the electrode plate 600, to return to their respective initial position.

According to the discharging method provided by the present invention, the follow-up cutting module 500 is capable of increasing the discharging speed of the electrode plate 600 by performing follow-up cutting, and the follow-up receiving module is capable of receiving the electrode plate 600 by performing follow-up receiving in the cutting process, thereby improving the receiving effect of the electrode plate 600.

According to some embodiments of the present invention, cutting off the electrode plate 600 by the follow-up cutting module 500 in response to the speed of the follow-up cutting module 500 in the conveying direction of the electrode plate 600 being consistent with the conveying speed of the electrode plate 600, includes:
pressing, by the pressing member, the electrode plate 600 on the conveyor belt 120;
starting the negative pressure suction device to enable the conveyor belt 120 to suck the electrode plate 600;
cutting off the electrode plate 600 by the follow-up cutting module 500; and
conveying, by the conveyor belt 120, a cut portion of the electrode plate 600 toward the downstream.

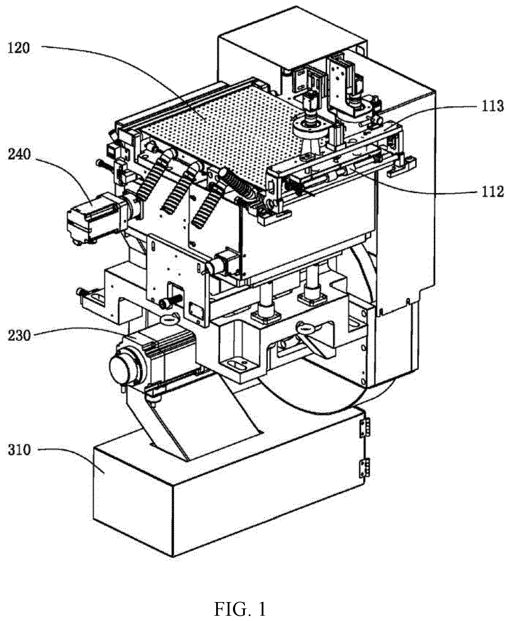

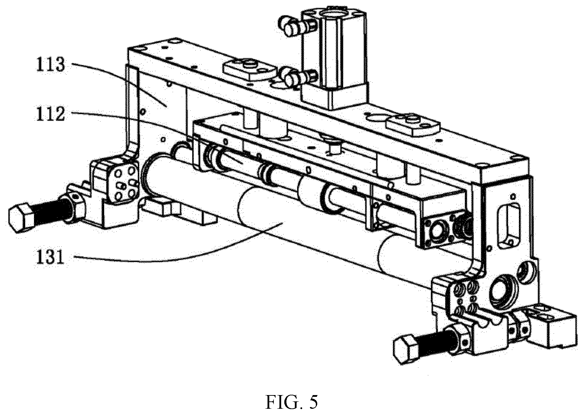

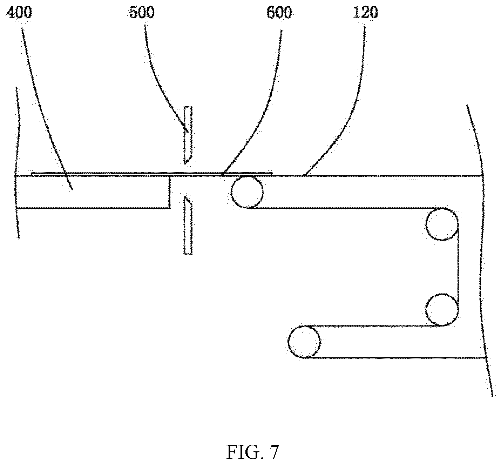

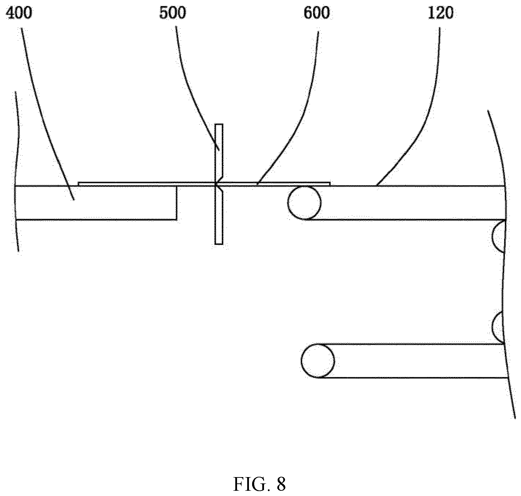

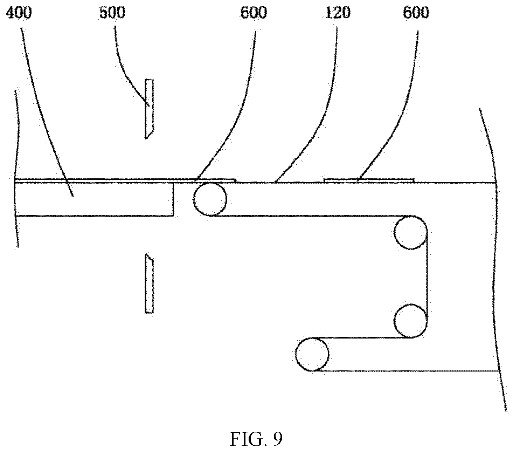

The following will describe in detail the follow-up receiving module, the electrode plate cutting apparatus and the discharging method according to the present invention in a specific embodiment with reference to FIGS. 1 to 9. It should be understood that the following description is only illustrative rather than being construed as specific limitation on the present invention.

The electrode plate cutting apparatus is used for cutting the electrode plate 600. The electrode plate cutting apparatus includes the material conveying line 400, the follow-up cutting module 500 and the follow-up receiving module. The follow-up cutting module 500 is located at the downstream of the material conveying line 400, and the follow-up receiving module is located at the downstream of the follow-up cutting module 500.

The material conveying line 400 is capable of receiving and conveying the electrode plate 600 from upstream.

The follow-up cutting module 500 is capable of moving in the reciprocating manner to cut the electrode plate 600 in the follow-up manner.

The follow-up receiving module includes the rack, the receiving unit, the driving unit and the waste material collecting unit.

The receiving unit is used for receiving the electrode plate 600 from the material conveying line 400, and the receiving unit includes the sliding table 110, the conveyor belt 120, and the roller assembly.

The sliding table 110 is located at an end of the rack close to the material conveying line 400. The sliding table 110 includes the suction plate 111, a pressing roller mounting seat 113, a temporary storage roller mounting seat 114 and a cam connecting seat 115.

The suction plate 111 is mounted on the rack by means of a guide rail and slider mechanism, and a vacuum cavity is formed in the suction plate 111 and is used for communicating with the negative pressure suction device. The pressing roller mounting seat 113 is mounted at the end of the suction plate 111 close to the material conveying line, a rotatable pressing roller 112 is mounted on the pressing roller mounting seat 113, and an air cylinder for driving the pressing roller 112 to press the suction plate 111 as well as a vision camera for detecting the electrode plate 600 are further mounted on the pressing roller mounting seat 113. The cam connecting seat 115 is mounted on a side of the suction plate 111 and is provided with a connecting groove. The temporary storage roller mounting seat 114 is mounted on a bottom surface of the suction plate 111.

The conveyor belt 120 is mounted on the roller assembly, and the roller assembly includes the first main roller 131, the second main roller 132, the temporary storage rollers 133, the tensioning roller 134 and the elastic tensioning member.

The first main roller 131 is mounted on the pressing roller mounting seat 113, the second main roller 132 is mounted on the rack, the first main roller 131 is located at the end of the sliding table 110 close to the upstream, and the second main roller 132 is located at the downstream of the first main roller 131. The roller assembly includes the two temporary storage rollers 133, where one temporary storage roller 133 is mounted on the temporary storage roller mounting seat 114, the other temporary storage roller 133 is mounted on the rack, and the two temporary storage rollers 133 are in contact with different sides of the conveyor belt 120 respectively, such that the two temporary storage rollers 133 can get close to or away from each other in response to the first main roller 131 and the second main roller 132 being away from or close to each other. The tensioning roller 134 is movably mounted on the rack, and the elastic tensioning member is provided between the rack and the tensioning roller 134.

The driving unit includes the first driver 230, the second driver 240, the limiting plate 250 and the transmission mechanism.

The first driver 230 is a rotating motor and is mounted on the rack. The transmission mechanism includes the cam 210 and the connecting assembly, the cam 210 is mounted on the first driver 230 and includes a cam groove 211, and the connecting assembly includes a swing arm 220. The swing arm 220 is in the shape of a straight rod and includes a main arm 221 and an extension arm 222, the main arm 221 is articulated on the rack, and the extension arm 222 is movably mounted on the main arm 221. The adjustment screw is mounted on the extension arm 222 and is pressed on the main arm 221, and by adjusting a screwing-in depth of the adjustment screw, a mounting position of the extension arm 222 can be changed. The swing arm 220 includes the first connecting portion and the second connecting portion, the first connection part is located on the main arm 221, the second connecting portion is located on the extension arm 222, the first connecting portion is connected to the cam groove 211, and the second connecting portion is connected to the connecting groove. The limiting plate 250 is mounted at a connecting position between the first connecting portion and the cam groove 211, and the limiting plate 250 is provided with a limiting groove and used for limiting a movement range of the first connecting portion.

The first driver 230 is capable of driving the sliding table 110 to move in the reciprocating manner in the conveying direction of the electrode plate 600 by means of the transmission mechanism.

The waste material collecting unit includes a waste material box 310 and a collecting pipe 320.

The collecting pipe 320 communicates with the waste material box 310, and the collecting pipe 320 includes a collection port that is located at the downstream of the receiving unit. The collecting pipe 320 is movably mounted on the rack, and the second driver 240 is connected to the collecting pipe 320 and is capable of driving the collecting pipe 320 to be move up and down, so as to allow the collecting port to receive or avoid the electrode plate 600.

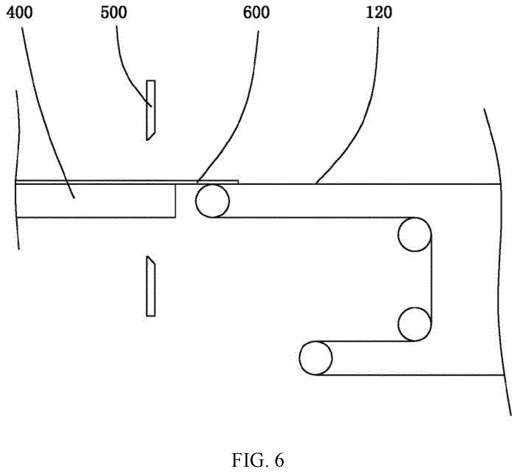

Referring to FIGS. 6 to 9, the electrode plate cutting apparatus uses the following discharging method:
receiving the electrode plate 600 from the upstream by the material conveying line 400, and conveying the electrode plate 600 toward the downstream by the material conveying line 400;
moving the follow-up cutting module 500 following the electrode plate 600 from an initial position of follow-up cutting, moving the sliding table 110 following the electrode plate 600 from the initial position of follow-up cutting, and receiving the electrode plate 600 by the sliding table 110;
in response to the speed of the follow-up cutting module 500 in the conveying direction of the electrode plate 600 being consistent with the conveying speed of the electrode plate 600, the pressing member pressing the electrode plate 600 on the conveyor belt 120, starting the negative pressure suction device, allowing the conveyor belt 120 to suck the electrode plate 600, and cutting off the electrode plate 600 by the follow-up cutting module 500; and
moving the follow-up cutting module 500 and the sliding table 110 in a direction opposite to the conveying direction of the electrode plate 600, so as to return to their respective initial position, and conveying, by the conveyor belt 120, the cut portion of the electrode plate 600 toward the downstream.

According to the electrode plate cutting apparatus and the discharging method in the embodiment of the present invention, the follow-up cutting module 500 can increase the discharging speed of the electrode plate 600 by performing follow-up cutting, and the follow-up receiving module can receive the electrode plate 600 by performing follow-up receiving in the cutting process, thereby improving the receiving effect of the electrode plate 600. The electrode plate cutting apparatus and the discharging method can be used for cutting the electrode plate 600 in the stacking process.

In the description of the specification, the explanation with reference to the terms such as "an embodiment", "some embodiments", "exemplary embodiments", "specific examples", or "some examples" means that specific features, structures, materials, or characteristics described in combination with the embodiment(s) or example(s) are included in at least one embodiment or example of the present invention. In this specification, the schematic expressions of the above terms do not necessarily refer to the same embodiments or examples. Moreover, the specific features, structures, materials, or characteristics described herein can be combined in any one or more embodiments or examples in a suitable manner.

Although the embodiments of the present invention have been shown and described, those of ordinary skill in the art can appreciate that various changes, modifications, substitutions, and variations can be made to these embodiments without departing from the principle and gist of the present invention, and the scope of the present invention is defined by the appended claims and equivalents thereof.

## Claims

1. A follow-up receiving module, comprising:
a rack;
a receiving unit, the receiving unit being used for receiving a material from the upstream, the receiving unit comprising a sliding table, the sliding table being mounted on the rack, and the sliding table being located at an end of the rack close to the upstream; and
a driving unit, the driving unit comprising a first driver and a transmission mechanism, the first driver being mounted on the rack, the first driver being in transmission connection with the sliding table by means of the transmission mechanism, and the first driver being capable of driving the sliding table to move in a reciprocating manner in the direction in which the material is conveyed.

2. The follow-up receiving module according to claim 1, wherein the transmission mechanism comprises a cam and a connecting assembly, the cam being mounted on the first driver, the connecting assembly connecting the cam and the sliding table, and the connecting assembly being used for driving the sliding table to move along a preset route.

3. The follow-up receiving module according to claim 2, wherein the connecting assembly comprises a swing arm articulated on the rack, the swing arm comprising a first connecting portion and a second connecting portion; the cam comprises a cam groove, the first connecting portion being connected to the cam groove; the sliding table comprises a connecting groove, the second connecting portion being connected to the connecting groove; and a distance between the first connecting portion and an articulating point of the swing arm is adjustable and/or a distance between the second connecting portion and an articulating point of the swing arm is adjustable.

4. The follow-up receiving module according to claim 1, wherein the receiving unit comprises a conveyor belt and a roller assembly, the conveyor belt being mounted on the roller assembly, and the roller assembly comprising a first main roller, a second main roller and temporary storage roller; the first main roller is mounted on the sliding table, the second main roller is mounted on the rack, the first main roller is located at the end of the sliding table close to the upstream, the second main roller is located at the downstream of the first main roller, and the temporary storage roller is used for temporarily storing an excessive portion of the conveyor belt.

5. The follow-up receiving module according to claim 4, wherein the roller assembly comprises two temporary storage rollers, one of the temporary storage rollers being mounted on the sliding table, the other of the temporary storage rollers being mounted on the rack, and the two temporary storage rollers being respectively in contact with different sides of the conveyor belt; the two temporary storage rollers are capable of being close to or away from each other in response to the first main roller and the second main roller being away from or close to each other; the roller assembly comprises a tensioning roller, the tensioning roller being used for tensioning the conveyor belt and movably mounted on the rack, and an elastic tensioning member being provided between the rack and the tensioning roller.

6. The follow-up receiving module according to claim 4, wherein the conveyor belt is provided with suction holes, the sliding table comprises a suction plate, a vacuum cavity is formed in the suction plate and is used for communicating with a negative pressure suction device, and an opening of the vacuum cavity matches the suction hole to allow the suction hole to suck the material.

7. The follow-up receiving module according to claim 6, wherein the sliding table comprises a pressing member, the pressing member being located on the side of the conveyor belt away from the suction plate such that the pressing member is capable of moving close to the conveyor belt so as to press the material on the conveyor belt, and the pressing member comprising a pressing roller that is adapted to the first main roller.

8. The follow-up receiving module according to claim 1, wherein the follow-up receiving module comprises a waste material collecting unit, the waste material collecting unit comprising a waste material box and a collecting pipe, the collecting pipe communicating with the waste material box, and the collecting pipe comprising a collecting port that is located at the downstream of the receiving unit.

9. The follow-up receiving module according to claim 8, wherein the collecting pipe is movably mounted on the rack, the driving unit comprises a second driver, the second driver is connected to the collecting pipe, and the second driver is capable of driving the collecting pipe to move, allowing the collecting port to receive or avoid the material.

10. An electrode plate cutting apparatus, comprising a material conveying line, a follow-up cutting module and the follow-up receiving module according to any one of claims 1-9, the follow-up cutting module being located at the downstream of the material conveying line such that the material conveying line is capable of receiving and conveying an electrode plate from the upstream, and the follow-up receiving module being located at the downstream of the follow-up cutting module such that the follow-up cutting module is capable of moving in a reciprocating manner to cut the electrode plate in a follow-up manner, and the sliding table is capable of following the follow-up cutting module to receive the electrode plate.

11. A discharging method using the electrode plate cutting apparatus according to claim 10, the discharging method comprising the following steps:
receiving an electrode plate from the upstream by the material conveying line, and conveying the electrode plate toward the downstream by the material conveying line;
moving the follow-up cutting module following the electrode plate from an initial position of follow-up cutting, moving the sliding table following the electrode plate from the initial position of follow-up cutting, and receiving the electrode plate by the sliding table;
cutting off the electrode plate by the follow-up cutting module in response to the speed of the follow-up cutting module in a conveying direction of the electrode plate being consistent with the conveying speed of the electrode plate; and
moving the follow-up cutting module and the sliding table in a direction opposite to the conveying direction of the electrode plate, so as to return to respective initial position thereof.

12. The discharging method according to claim 11, wherein
the receiving unit comprises a conveyor belt and a roller assembly, the conveyor belt being mounted on the roller assembly, and the roller assembly comprising a first main roller and a second main roller; the first main roller is mounted on the sliding table, the second main roller is mounted on the rack, the first main roller is located at the end of the sliding table close to the upstream, and the second main roller is located at the downstream of the first main roller; the conveyor belt is provided with suction holes, the sliding table comprises a suction plate, a vacuum cavity is formed in the suction plate and is used for communicating with a negative pressure suction device, and an opening matches the suction hole to allow the suction hole to suck the material; the sliding table comprises a pressing member, the pressing member being located on the side of the conveyor belt away from the suction plate such that the pressing member is capable of moving close to the conveyor belt so as to press the material on the conveyor belt; the pressing member comprises a pressing roller that is adapted to the first main roller;
wherein cutting off the electrode plate by the follow-up cutting module in response to the speed of the follow-up cutting module in a conveying direction of the electrode plate being consistent with the conveying speed of the electrode plate, comprises:
pressing, by the pressing member, the electrode plate on the conveyor belt;
starting the negative pressure suction device to enable the conveyor belt to suck the electrode plate;
cutting off the electrode plate by the follow-up cutting module; and
conveying, by the conveyor belt, a cut portion of the electrode plate toward the downstream.
